# EUROPEAN PATENT SPECIFICATION

(11) **EP 3 604 922 B1**
(45) Date of publication and mention of the grant of the patent: **16.02.2022**
(21) Application number: 19789853.9
(22) Date of filing: 11.03.2019
(51) Int. Cl.: F23G 7/06, F23G 5/44, F23L 15/02

(54) **REGENERATIVE COMBUSTION OXIDATION APPARATUS**
REGENERATIVE VERBRENNUNGSOXIDATIONSVORRICHTUNG
APPAREIL D'OXYDATION PAR COMBUSTION RÉGÉNÉRATIVE

(30) Priority: 25.04.2018 KR 20180047794
(43) Date of publication of application: 05.02.2020
(73) Proprietor: KC Cottrell Co., Ltd., Seoul 03909 (KR)
(72) Inventor: KIM, Eun Yeon, Incheon 22186 (KR); KIM, Yu Kyung, Incheon 21982 (KR)
(74) Representative: M. Zardi & Co S.A.
(86) International application number: PCT/KR2019/002791
(87) International publication number: WO 2019/208925

(56) References cited:
- JP-B2- 5 232 657
- KR-B1- 101 618 718
- KR-B1- 101 754 215
- KR-Y1- 200 176 872
- KR-Y1- 200 257 082
- US-A- 4 415 139
- US-A- 5 692 892
- US-A1- 2016 356 386

## Description

### Technical Field

The present invention relates to a regenerative thermal oxidizer having an improved structure of a switching unit for controlling an inflow of harmful gas.

### Background Art

A volatile organic compound is a hydrocarbon compound having a vapor pressure of 1,36 mbar (0.02 psi) or more or a boiling point of less than 100°C. When it is coexisted with a nitrogen compound in the air, a photochemical reaction is caused by the action of sunlight to generate ozone and photochemical oxides. The volatile organic compound is not only substances that pollute the environment, but also harmful substances that cause disorders of the respiratory tract and carcinogens.

For this reason, various methods are used in industrial sites to remove harmful gases including the volatile organic compound.

A method for removing the volatile organic compound is a combustion oxidation method in which the volatile organic compound are directly burned and removed at a high temperature of about 800°C. In the case of the combustion oxidation method, since the volatile organic compound is burned at a high temperature, the discharged clean gas is also in a high temperature state. However, the energy can be wasted if the waste heat of the discharged clean gas cannot be used. Therefore, a regenerative thermal oxidizer for recovering the waste heat of the clean gas and preheating the volatile organic compound to be introduced is widely used.

The conventional regenerative thermal oxidizer disclosed in Korean Patent Registration No. 10-1618718 (April 29, 2016) and having the features of the preamble of claim 1 is characterized in that the interior of the main body 110 is divided into a plurality of zones (121, 122, 123, 124 and 125) and a harmful gas inflow pipe (151) through which harmful gas passes, a clean gas discharge pipe (154) through which clean gas passes, and a purge gas supply pipe (157) through which purge gas passes are communicated with each of the zones (121, 122, 123, 124 and 125), Each of the harmful gas inflow pipe (151), the clean gas discharge pipe (154), and the purge gas supply pipe (157) are independently opened and closed by the valve unit 160.

In the conventional regenerator combustion and oxidization apparatus, the harmful gas can leak between the inner surface of the harmful gas inflow pipe (151) and the rim of the opening and closing plate (165) of the valve unit (160) . Since the harmful gas can be introduced into the main body (110) through the harmful gas inflow pipe (151) even when the harmful gas inflow pipe (151) is closed by the valve unit (160), the harmful gas is mixed with the discharging clean gas to be discharged. Therefore, there is a disadvantage that the reliability of the product is deteriorated.

Regenerative thermal oxidizer according to the prior art are known from KR 101754215.

### Disclosure

### Technical Problem

It is an object of the present invention to provide a regenerative thermal oxidizer that can solve all the problems of the related art as described above.

It is another object of the present invention to provide a regenerative thermal oxidizer that can enhance reliability of the product by preventing harmful gas from flowing into a body through a harmful gas pipe when the harmful gas pipe through which the harmful gas passes is closed.

### Technical solution

According to the present invention there is provided a regenerative thermal oxidizer according to claim 1, further embodiments of the present invention being defined by the dependent claims.

Disclosed is further a thermal oxidizer including: a body having a combustion chamber defined in its inner upper portion so that harmful gas is introduced and burned in the combustion chamber, while an inner lower portion of the body is partitioned into a plurality of zones; a heat storage member installed in each of the zones of the body to store heat; a harmful gas pipe installed such that its upper side communicates with each of the zones of the body to guide the harmful gas to be introduced into the combustion chamber through the heat storage member; a clean gas pipe installed such that its upper side communicates with each of the zones of the body to guide clean gas, which is produced in the combustion chamber by combustion of the harmful gas and then passes through a heat storage member through which the harmful gas does not pass, to be discharged out of the body; a purge gas pipe installed such that its one side communicates with each of the zones of the body to guide purge gas to be introduced into the combustion chamber through a heat storage member through which the harmful gas and the clean gas do not pass; and a first switching unit, a second switching unit, and a third switching unit configured to open and close the harmful gas pipe, the clean gas pipe, and the purge gas pipe, wherein: upper and lower sides of the first switching unit communicate with upper and lower portions of the harmful gas pipe, respectively, and a space is defined in the center of the first switching unit; and when the harmful gas pipe is closed by the first switching unit, gas remaining in the space of the first switching unit is forcibly discharged to the outside.

### Advantageous Effects

In the regenerative thermal oxidizer according to the embodiment of the present invention, when the clean gas is discharged to one of the zones of the body in which the heat storage member is installed, the harmful gas pipe of the zones in which the clean gas is discharged is closed by the first switching unit. Moreover, when the harmful gas pipe is closed by the first switching unit, the gas remaining in the first switching unit is forcibly discharged to the outside of the first switching unit. Therefore, no harmful gas is introduced into the zone through which the clean gas is discharged. Accordingly, since the harmful gas is prevented from being mixed with the clean gas, the reliability of the product can be improved.

### Brief Description of Drawings

The above and other objects, features and advantages of the present invention will be more apparent from the following detailed description taken in conjunction with the accompanying drawings, in which:
FIG. 1 is a perspective view illustrating a regenerative thermal oxidizer according to an embodiment of the present invention;
FIG. 2 is a partially exploded perspective view of FIG. 1;
FIG. 3 is a front cross-sectional view schematically illustrating the main part of FIG. 1;
FIG. 5 is an exploded perspective view illustrating the switching unit of FIG. 2; and
FIGS. 6 and 7 are cross-sectional views taken along line "A-A" of FIG. 5.

### [Reference Signs List]

- 110:: body
- 120:: heat storage member
- 141:: harmful gas pipe
- 143:: clean gas pipe
- 150:: first switching unit
- 151:: frame
- 153:: switching member

### Best Mode

### Mode for Invention

The desirable implementation examples in accordance with this invention are explained in detail in reference to the drawings attached below. However, the same reference numbers are given to the same or corresponding components regardless of drawing codes and repeated explanations will be omitted.

Meanwhile, the meaning of the terms described in the present specification should be understood as follows.

The singular expression includes plural expressions unless it is apparently different in the context. The terms such as "the first", "the second" and so on are used to distinguish one element from another. The scope of the right should not be limited by these terms.

The terms such as "include" or "have" in this application intend to designate that the feature, number, stage, movement, component, part or the combination described in the specification exist.

It should be understood that the term "at least one" includes all possible combinations from one or more related items. For example, the meaning of "at least one of the first item, the second item, and the third item" means not only the first item, the second item or the third item, but also any combination of items that can be presented from more than one among the first through third items.

The term called "and/or" includes the combination of the plural described and related items or a certain item of the plural described and related items. For example, the meaning of "at least one of the first item, the second item, and the third item" means not only the first item, the second item or the third item, but also any combination of items that can be presented from more than one among the first through third items.

When it is mentioned to be "connected or installed" to the other component, a certain component may be connected or linked to the other component. However, it will be understood that there may be some other components between them. On the other hand, when an element is referred to as "directly connected or installed" to another element, it will be understood that there are no other elements between them. On the other hand, other expressions that describe the relationship between components, such as "between" and "directly between" or "adjacent to" and "directly adjacent to" should be interpreted as well.

On the other hand, when an element is referred to as being "formed, combined, or installed" with another element, it is to be interpreted that one element and other elements may be separately or integrally provided.

Hereinafter, a regenerative thermal oxidizer according to exemplary embodiments of the present invention will be described in detail with reference to the accompanying drawings.

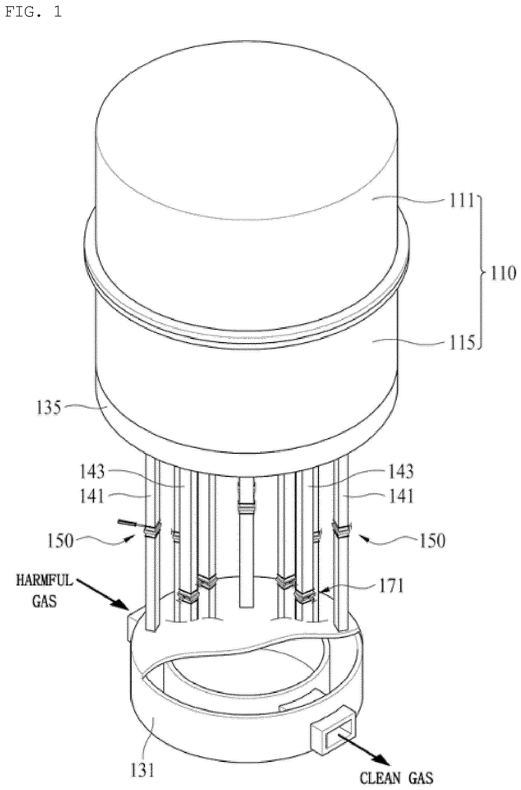

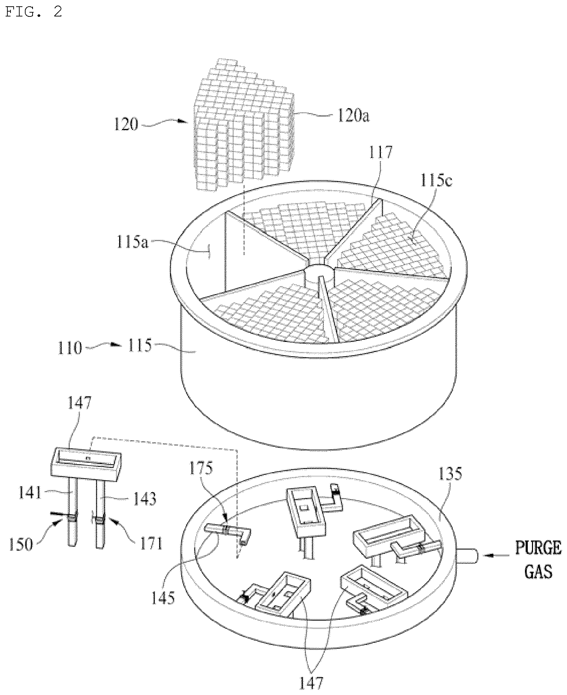

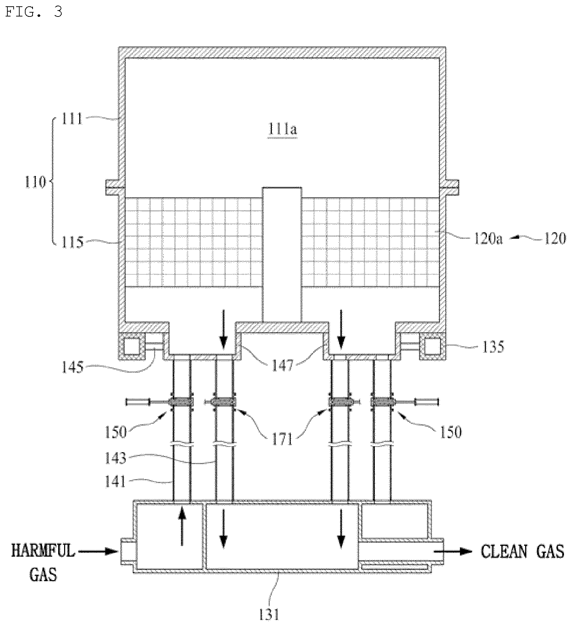

FIG. 1 is a perspective view illustrating a regenerative thermal oxidizer according to an embodiment of the present invention. FIG. 2 is a partially exploded perspective view of FIG. 1. FIG. 3 is a front cross-sectional view schematically illustrating the main part of FIG. 1.

As illustrated in the drawings, the regenerative thermal oxidizer according to the embodiment of the present invention may include a body (110) having a space defined therein. The body (110) may have a combustion chamber (111a) defined in the inner upper portion thereof so that harmful gas such as volatile organic compounds is introduced and burned in the combustion chamber (111a). The body (110) may have a heat storage chamber defined in the inner lower portion thereof while a heat storage member (120) to be described later is installed in the heat storage chamber.

The body (110) may include an upper body (111) and a lower body (115) coupled to each other. The interior of the upper body (111) may be defined as the combustion chamber (111a) and the interior of the lower body (115) may be defined as the heat storage chamber. In this case, a heating means such as a burner for burning the harmful gas may be installed in the upper body (111) .

The heat storage chamber as the interior of the lower body (115) may be partitioned into a plurality of zones arranged radially about the center of the body (110). More specifically, the interior of the lower body (115) may be partitioned into 2n-1 zones (n is a natural number of two or more) or 2n zones (n is a natural number of two or more).

When the interior of the lower body (115) is partitioned into 2n-1 zones, the harmful gas may pass through n-1 zones. The clean gas in the combustion chamber (111a), which is produced by the combustion of the harmful gas, may pass through n-1 zones equal to the number of zones through which the harmful gas passes, and the purge gas to be described later may pass through one zone.

When the interior of the lower body (115) is partitioned into 2n zones, the harmful gas may pass through n-1 zones. The clean gas in the combustion chamber (111a), which is produced by the combustion of the harmful gas, may pass through n-1 zones equal to the number of zones through which the harmful gas passes, and the purge gas may pass through one zone.

Regardless of the number of zones defined within the lower body (115), the clean gas may pass through zones through which the harmful gas does not pass, and the purge gas may pass through zones through which the harmful gas and the clean gas do not pass.

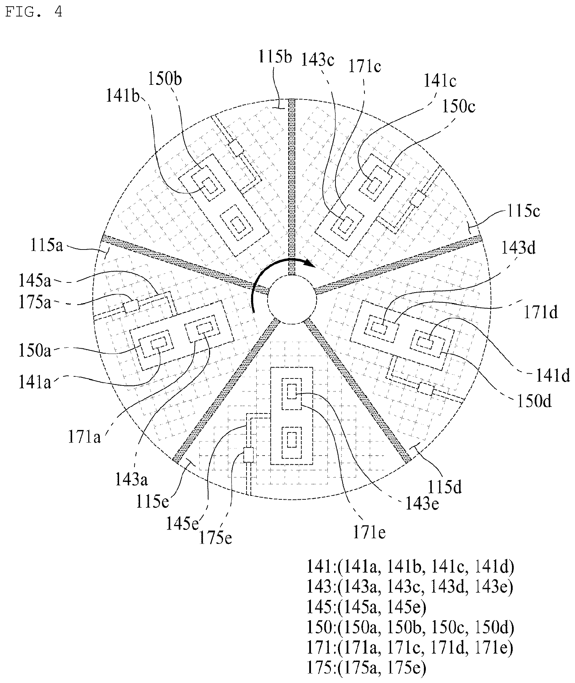

In the regenerative thermal oxidizer according to the embodiment of the present invention, the interior of the lower body (115) is illustrated as being partitioned into five zones (115a, 115b, 115c, 115d, and 115e) (see FIG. 4) in the case of n = 3.

The heat storage member (120) made of a ceramic material may be installed in each of the zones (115a, 115b, 115c, 115d, and 115e), and the harmful gas, the clean gas, and the purge gas may pass through the heat storage member (120).

In order to allow the harmful gas, the clean gas, and the purge gas to pass through the heat storage member (120), the heat storage member (120) may include a plurality of unit heat storage members (120a), each of which is a rectangular hollow body and is open at the upper and lower surfaces thereof. That is, the heat storage member (120) may be formed by arranging the unit heat storage members (120a) in rows and columns and stacking the unit heat storage members (120a) arranged in rows and columns. Each of the unit heat storage members (120a) has a pore formed therein since the gas passes through the unit heat storage member (120a).

The lower body (115) may be provided therein with a partition wall (117) for partitioning the interior of the lower body (115) into the zones (115a, 115b, 115c, 115d, and 115e), and the partition wall (117) may be supportably installed in the lower body (115). The lower surface of the heat storage member (120) may be supported by a support plate (not illustrated) with a mesh structure and may be spaced apart from the lower surface of the lower body (115).

In the regenerative thermal oxidizer according to the embodiment of the present invention, n is 3 (n = 3) since the interior of the lower body (115) is partitioned into the five zones (115a, 115b, 115c, 115d, and 115e). Thus, the harmful gas may pass through two zones, the clean gas may pass through two zones through which the harmful gas does not pass, and the purge gas may pass through one zone through which the harmful gas and the clean gas do not pass.

It is preferable that the zone through which the harmful gas passes and the zone through which the clean gas passes are substantially symmetrical with each other about the center of the lower body (115). The harmful gas, the clean gas, and the purge gas may pass through the individual zones (115a, 115b, 115c, 115d, and 115e) while sequentially moving the individual zones (115a, 115b, 115c, 115d, and 115e). That is, each of the harmful gas, the clean gas, and the purge gas may circulate in the zones (115a, 115b, 115c, 115d, and 115e) while sequentially passing through the zones (115a, 115b, 115c, 115d, and 115e). It is preferable that the circulation directions of the harmful gas, the clean gas, and the purge gas are the same.

A first gas tank (131) may be installed beneath the body (110), and the harmful gas, the clean gas, and the purge gas may be introduced into and temporarily separated and stored in the first gas tank (131). The interior of the first gas tank (131) may be partitioned into an inner portion and an outer portion which are concentric. The harmful gas generated at the industrial site may be accommodated and stored in the outer portion of the first gas tank (131), and then introduced into the combustion chamber (111a) through the heat storage member (120) of each of the zones (115a, 115b, 115c, 115d, and 115e). The clean gas in the combustion chamber (111a), which is produced by the combustion of the harmful gas, may be accommodated and stored in the inner portion of the first gas tank (131) through the heat storage member (120) of each of the zones (115a, 115b, 115c, 115d, and 115e), and then discharged to the outside. Since the harmful gas and the clean gas are separated and stored in the first gas tank (131), they are not mixed with each other.

Of course, the harmful gas may be accommodated and stored in the inner portion of the first gas tank (131) and the clean gas may be accommodated and stored in the outer portion of the first gas tank (131).

A harmful gas pipe (141) may be installed between the body (110) and the outer portion of the first gas tank (131) in order to guide the harmful gas stored in the outer portion of the first gas tank (131) to be introduced into the combustion chamber (111a) through the heat storage member (120) of each of the zones (115a), (115b), (115c), (115d), and (115e). The harmful gas pipe (141) may consist of harmful gas pipes of a number corresponding to the number of zones (115a, 115b, 115c, 115d, and 115e), so that the upper ends of the harmful gas pipes (131) may communicate with the respective zones (115a, 115b, 115c, 115d, and 115e) and the lower ends thereof may communicate with the outer portion of the first gas tank (131).

A clean gas pipe (143) may be installed between the body (110) and the inner portion of the first gas tank (131) in order to guide the clean gas in the combustion chamber (111a) to be discharged to the inner portion of the first gas tank (131) through the heat storage member (120) of each of the zones (115a, 115b, 115c, 115d, and 115e). The clean gas pipe (143) may consist of clean gas pipes of a number corresponding to the number of zones (115a, 115b, 115c, 115d, and 115e), so that the upper ends of the clean gas pipes (143) may communicate with the respective zones (115a, 115b, 115c, 115d, and 115e) and the lower ends thereof may communicate with the inner portion of the first gas tank (131).

A purge gas supply module may be installed on the bottom outside the body (110) in order to guide the purge gas to be introduced into the combustion chamber (111a) through the heat storage member (120) of each of the zones (115a, 115b, 115c, 115d, and 115e). The purge gas supply module may include a second gas tank (135) and a purge gas pipe (145).

The second gas tank (135) has a ring shape and may be installed to surround the harmful gas pipes (141) and the clean gas pipes (143). The purge gas pipe (145) may consist of purge gas pipes of a number corresponding to the number of zones (115a, 115b, 115c, 115d, and 115e), so that one ends of the purge gas pipes (145) may communicate with the respective zones (115a, 115b, 115c, 115d, and 115e) and the other ends thereof may communicate with the second gas tank (135).

Communication ducts (147) communicating with the respective zones (115a, 115b, 115c, 115d, and 115e) may be installed on the bottom of the body (110), more specifically in the second gas tank (135). Each of the communication ducts (147) may communicate with the upper end of the associated harmful gas pipe (141), the upper end of the associated clean gas pipe (143), and the one end of the associated purge gas pipe (145), which each communicates with the associated zone (115a, 115b, 115c, 115d, and 115e). Thus, the harmful gas and the purge gas may be introduced into each of the zones (115a, 115b, 115c, 115d, and 115e) through the communication ducts (147), and the clean gas in the combustion chamber (111a) may be discharged to the communication ducts (147) through the zones (115a, 115b, 115c, 115d, and 115e).

A first switching unit (150), a second switching unit (171), and a third switching unit (175) may be installed on the harmful gas pipe (141), the clean gas pipe (143), and the purge gas pipe (145), respectively. The respective first, second, and third switching units (150, 171, and 175) may open and close the harmful gas pipe (141), the clean gas pipe (143), and the purge gas pipe (145), independently.

Thus, the harmful gas may be introduced into the combustion chamber (111a) by selectively passing through the heat storage member (120) of each zone (115a, 115b, 115c, 115d, and 115e) by the first switching unit (150). The clean gas may be discharged to the first gas tank (131) by selectively passing through the heat storage member (120) of each zone (115a, 115b, 115c, 115d, and 115e) by the second switching unit (171). The purge gas may be introduced into the combustion chamber (111a) by selectively passing through the heat storage member (120) of each zone (115a, 115b, 115c, 115d, and 115e) by the third switching unit (175).

Each of the harmful gas pipe (141), the clean gas pipe (143), and the purge gas pipe (145) may have a square shape in cross section.

The operation of the regenerative thermal oxidizer according to the embodiment of the present invention will be described with reference to FIGS. 1 to 4. FIG. 4 is a top view schematically illustrating the lower body of FIG. 2.

Hereinafter, the harmful gas, the clean gas, and the purge gas will be exemplarily described as sequentially passing through the heat storage members (120) of the respective zones (115a, 115b, 115c, 115d, and 115e) while circulating in a forward direction, which is a clockwise direction, based on the center of the lower body (115).

As illustrated in FIG. 4, n is 3 (n = 3) since the interior of the lower body (115) is partitioned into the five zones (115a, 115b, 115c, 115d, and 115e). Thus, the harmful gas and the clean gas may each pass through two zones, and may pass through the respective zones which are substantially symmetrical with each other.

It is assumed that the state where all the first to third switching units (150 to 175) are closed is an initial state.

In the initial state, the first switching units (150a and 150b) and the second switching units (171c and 171d) are adjusted to open the harmful gas pipes (141a and 141b) and the clean gas pipes (171c and 171d), respectively, so that the harmful gas and the clean gas pass through the zones (115a and 115b) and the zones (115c and 115d), respectively.

Then, the harmful gas is introduced into the combustion chamber (111a) through the zones (115a and 115b). The harmful gas introduced into the combustion chamber (111a) is burned while flowing along one surface, an upper surface, and the other surface of the combustion chamber (111a) to become clean gas, and then discharged through the zones (115c and 115d). In this case, the heat storage members (120) of the zones (115c and 115d) through which the clean gas passes exchange heat with the clean gas to store heat.

In this state, when the third switching unit (175e) is opened, the purge gas is introduced into the zone (115e) through the purge gas pipe (145e) so that the harmful gas remaining in the zone (115e) is introduced into the combustion chamber (111a) together with the purge gas. Thus, the zone (115e) becomes clean. In this case, the purge gas is preferably introduced into the zone (115e) between the rearmost zone (115a) through which the harmful gas passes and the foremost zone (115d) through which the clean gas passes. The purge gas may be clean air.

When the zone (115e) becomes clean, the third switching unit (175e) is closed. Thereafter, sequentially, the clean gas pipe (143e) is opened and the clean gas pipe (143c) is closed by the second switching unit (171e) and the second switching unit (171c), and the harmful gas pipe (141c) is opened and the harmful gas pipe (141a) is closed by the first switching unit (150c) and the first switching unit (150e). Then, the harmful gas is introduced into the combustion chamber (111a) through the zones (115b and 115c), and the clean gas is discharged through the zones (115d and 115e) . Since the zone (115e) is clean by the purge gas, the clean gas discharged through the zone (115e) is not mixed with the harmful gas.

In this state, when the third switching unit (175a) is opened, the purge gas is introduced into the zone (115a) through the purge gas pipe (145a) so that the harmful gas remaining in the zone (115a) is introduced into the combustion chamber (111a) together with the purge gas. Thus, the zone (115a) becomes clean.

Thereafter, sequentially, the clean gas pipe (143a) is opened and the clean gas pipe (143d) is closed by the second switching unit (171a) and the second switching unit (171d), and the harmful gas pipe (141d) is opened and the harmful gas pipe (141b) is closed by the first switching unit (150d) and the first switching unit (150b). Then, the harmful gas is introduced into the combustion chamber (111a) through the zones (115c and 115d), and the clean gas is discharged through the zones (115e and 115a) . Since the zone (115a) is clean by the purge gas, the clean gas discharged through the zone (115a) is not mixed with the harmful gas.

Through the repetition of the above operation, the harmful gas is discharged as clean gas, and the heat storage member (120) stores heat by the clean gas.

In the regenerative thermal oxidizer according to the embodiment of the present invention, the body (110) may have a polygonal shape and the heat storage member (120) may have a shape corresponding to each zone (115a, 115b, 115c, 115d, or 115e) .

The harmful gas pipe (141) in the zone (115a, 115b, 115c, 115d, or 115e) through which the clean gas is discharged is closed. That is, harmful gas pipe (141) in the zone (115a, 115b, 115c, 115d, or 115e) through which the clean gas is discharged is closed by the first switching unit (150). However, if the harmful gas leaks from the harmful gas pipe (141) on which the first switching unit (150) is installed, the harmful gas may be introduced into the zone (115a, 115b, 115c, 115d, or 115e) through which the clean gas is discharged. Hence, the clean gas mixed with the harmful gas may be discharged.

The regenerative thermal oxidizer according to the embodiment of the present invention can forcibly discharge the harmful gas remaining in the first switching unit (150) due to leakage or the like when the harmful gas pipe (141) is closed by the fist switching unit (150) in order to prevent the discharged clean gas from being mixed with the harmful gas.

The upper and lower sides of the first switching unit (150) may communicate with the upper and lower portions of the harmful gas pipe (141), respectively, and a closed space may be defined in the center of the first switching unit (150). Thus, when the harmful gas pipe (141) is closed by the fist switching unit (150), gas containing the harmful gas remaining in the closed space of the first switching unit (150) may be forcibly discharged to the outside.

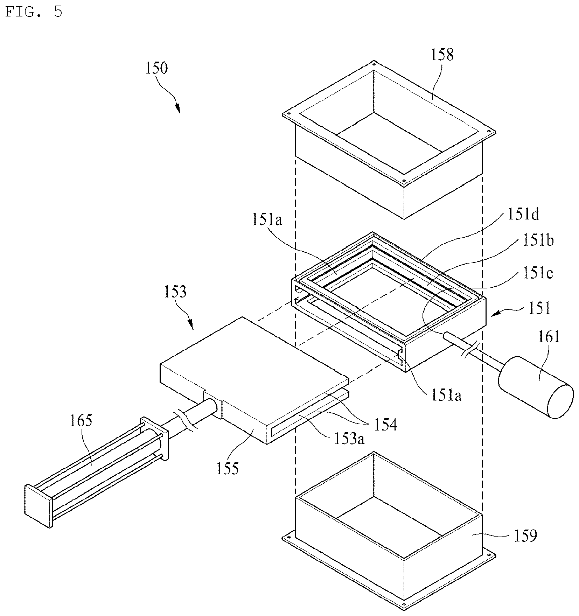

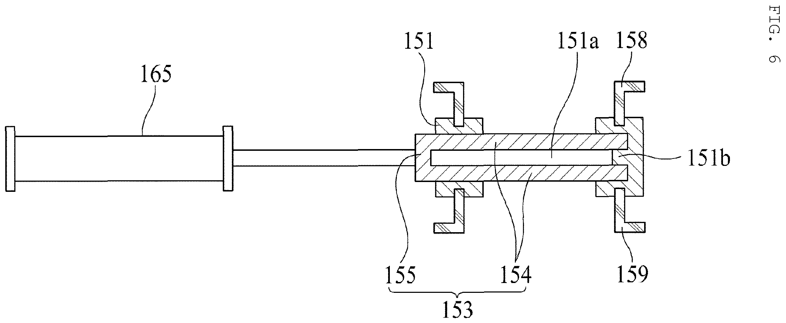

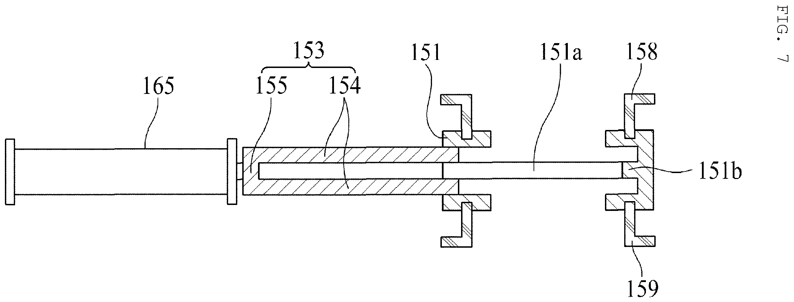

The first switching unit (150) will be described with reference to FIGS. 3 to 7. FIG. 5 is an exploded perspective view illustrating the switching unit of FIG. 2. FIGS. 6 and 7 are cross-sectional views taken along line "A-A" of FIG. 5.

As illustrated in the drawings, the first switching unit (150) may include a frame (151) and a switching member (153).

The frame (151) may have a hexahedral shape, and have a cross-sectional shape corresponding to that of the harmful gas pipe (141). The frame (151) may be open at the upper and lower surfaces thereof, and the upper and lower portions of the harmful gas pipe (141) may communicate with the open upper and lower surfaces of the frame (151), respectively. Thus, the upper and lower portions of the harmful gas pipe (141) may communicate with each other through the frame (151).

A typical hexahedron has four side plates. However, the frame (151) according to the embodiment of the present invention has three side plates, and one side may be open.

The switching member (153) may be inserted into the frame (151) through the open side of the frame (151), and may be installed to be rectilinearly movable in and out of the frame (151). Thus, the switching member (153) allows the upper and lower surfaces of the frame (151) to communicate with and be blocked from each other.

The switching member (153) may have a space (153a) defined therein, and the space (153a) is closed by the sides of the frame (151). The gas remaining in the space (153a) of the switching member (153) may be discharged out of the frame (151) when the upper and lower surfaces of the frame (151) are blocked by the switching member (153).

The switching member (153) may include a switching plate (154) and a connecting plate (155).

The switching plate (154) may consist of a pair of switching plates with a gap therebetween while facing each other. The switching plates (154) may be inserted into the frame (151) through the open side thereof, and may be installed to be rectilinearly movable in and out of the frame (151). The connecting plate (155) may be positioned at the open side of the frame (151) to be exposed out of the frame (151). The connecting plate (155) may integrally connect the pair of switching plates (154). Thus, when the switching member (153) is inserted into the frame (151) to block the upper and lower surfaces of the frame (151), the space (153a) of the switching member (153), which is defined by the switching plates (154) and the connecting plate (155), is closed by the sides of the frame (151) . When the upper and lower surfaces of the frame (151) are blocked by the switching member (153), the gas remaining in the closed space (153a) of the switching member (153) is forcibly discharged to the outside.

Guide rails (151a) facing each other may be formed on the inner surfaces of the facing side plates of the frame (151). The guide rails (151a) are inserted into the gap formed by the respective sides of the pair of switching plates (154). Since the switching plates (154) are supported by the guide rails (151a) inserted thereinto, the guide rails (151a) guide and support the rectilinear movement of the switching plates (154). An insertion rail (151b) may be formed on the inner surface of the side plate of the frame (151) facing the open side of the frame (151). When the upper and lower surfaces of the frame (151) are blocked by the switching member (153), the insertion rail (151b) may be inserted into the gap formed between the surfaces of the pair of switching plates (154) facing the insertion rail (151b). Thus, the upper and lower surfaces of the frame (151) may be stably blocked by the switching member (153) .

The insertion rail (151b) may be formed continuously with the guide rails (151a).

One side plate of the frame (151) may be formed with a discharge hole (151c) for discharging the gas, which remains in the space (153a) of the switching member (153) closed by the side plates of the frame (151), when the upper and lower surfaces of the frame (151) are blocked by the switching member (153) to the outside. One side of the discharge hole (151c) may communicate with the space (153a) of the switching member (153) and the other side thereof may communicate with a pump (161).

Thus, when the clean gas is discharged to one of the zones (115a, 115b, 115c, 115d, or 115e) formed in the body (110), the harmful gas pipe (141) in the zone through which the clean gas is discharged is closed by the first switching unit (150). Incidentally, when the harmful gas pipe (141) is closed by the first switching unit (150), the gas in the space (153a) of the switching member (153) closed by the frame (151) is discharged out of the first switching unit (150) by the pump (161). Then, the harmful gas in the first gas tank (131) is discharged to the outside through the discharge hole (151c) even when it leaks through the contact portion between the harmful gas pipe (141) and the first switching unit (150) or the contact portion between the parts of the first switching unit (150) to be introduced into the closed space (153a) of the switching member (153). Therefore, no harmful gas is introduced into the zone (115a, 115b, 115c, 115d, or 115e) through which the clean gas is discharged. Accordingly, the harmful gas is prevented from being mixed with the clean gas discharged to the first gas tank (131) from the body (110).

The first switching unit (150) may further include an upper connection pipe (158) and a lower connection pipe (159).

The upper and lower connection pipes (158 and 159) may be installed to communicate with the open upper and lower surfaces of the frame (151), respectively. The upper and lower connection pipes (158 and 159) may communicate with the upper and lower portions of the harmful gas pipe (141), respectively.

In order to stably install the upper and lower connection pipes (158 and 159) to the frame (151), groove-shaped insertion paths (151d) may be defined on the upper and lower surfaces of the frame (151), respectively, so that the lower end of the upper connection pipe (158) and the upper end of the lower connection pipe (159) are inserted into and coupled to the insertion paths (151d), respectively.

The contact portion between the harmful gas pipe (141) and the upper connection pipe (158), the contact portion between the harmful gas pipe (141) and the lower connection pipe (159), the contact portion between the frame (151) and the upper connection pipe (158), the contact portion between the frame (151) and the lower connection pipe (159), and the contact portion between the frame (151) and the switching member (153) may be sealed.

Reference numeral (165) of FIG. 5 refers to a drive unit such as a cylinder for rectilinearly moving the switching member (153). The second and third switching units (171 and 175) may be formed in the same or similar manner as the first switching unit (150).

In the regenerative thermal oxidizer according to the embodiment of the present invention, when the clean gas is discharged to one of the zones (115a, 115b, 115c, 115d, or 115e) of the body (110) in which the heat storage member (120) is installed, the harmful gas pipe (141) of the zones (115a, 115b, 115c, 115d, or 115e) in which the clean gas is discharged is closed by the first switching unit (150). Moreover, when the harmful gas pipe (141) is closed by the first switching unit (150), the gas remaining in the first switching unit (150) is forcibly discharged to the outside of the first switching unit (150). Therefore, no harmful gas is introduced into the zone (115a, 115b, 115c, 115d, or 115e) through which the clean gas is discharged. Accordingly, the harmful gas is prevented from being mixed with the clean gas.

It will be apparent to those skilled in the art that the scope of the invention is defined by the appended claims.

## Claims

1. A regenerative thermal oxidizer comprising:
a body (110) having a combustion chamber (111a) defined in its inner upper portion so that harmful gas is introduced and burned in the combustion chamber (111a), while an inner lower portion of the body (110) is partitioned into at least three zones;
a heat storage member (120) installed in each of the zones of the body (110) to store heat;
a plurality of harmful gas pipes (141) installed such that their respective upper sides communicate with each of the respective zones of the body (110) to guide the harmful gas to be introduced into the combustion chamber (111a) through the heat storage member (120);
a plurality of clean gas pipes (143) installed such that their respective upper sides communicate with each of the respective zones of the body (110) to guide clean gas, which is produced in the combustion chamber (111a) by combustion of the harmful gas and then passes through a heat storage member (120) through which the harmful gas does not pass, to be discharged out of the body (110);
a plurality of purge gas pipes (145) installed such that their respective one side communicate with each of the respective zones of the body (110) to guide purge gas to be introduced into the combustion chamber (111a) through a heat storage member (120) through which the harmful gas and the clean gas do not pass; and
a first switching unit (150), a second switching unit (171), and a third switching unit (175) configured to open and close the harmful gas pipe (141), the clean gas pipe (143), and the purge gas pipe (145), respectively, wherein:
upper and lower sides of the first switching unit (150) communicate with upper and lower portions of the harmful gas pipe (141), respectively wherein the harmful gas pipe (141) has a square shape in cross section,
and **characterized in that** the first switching unit (150) comprises:
a frame (151) having a hexahedral shape and having one open side and three side plates, upper and lower surfaces of the frame (151) being open to communicate with the respective upper and lower portions of the harmful gas pipe (141); and by
a switching member (153) installed to be rectilinearly movable in and out of the frame (151) and allowing the upper and lower surfaces of the frame (151) to communicate with and be blocked from each other, the switching member (153) having a space defined therein, the space being closed by the side plates of the frame (151), and
wherein when the upper and lower surfaces of the frame (151) are blocked by the switching member (153), gas remaining in the space of the switching member (153) closed by the side plates of the frame (151) is forcibly discharged to the outside of the space.

2. The regenerative thermal oxidizer according to claim 1, wherein:
guide rails (151a) facing each other are formed on inner surfaces of the facing side plates of the frame (151) to guide rectilinear movement of the switching member (153); and
sides of the switching member (153) are inserted into and supported by the guide rails (151a).

3. The regenerative thermal oxidizer according to claim 1, wherein:
an insertion rail (151b) is formed on an inner surface of the side plate facing the open side of the frame (151); and
when the upper and lower surfaces of the frame (151) are blocked by the switching member (153), the insertion rail (151b) is inserted into a surface of the switching member (153) facing the insertion rail (151b).

4. The regenerative thermal oxidizer according to claim 1, wherein the switching member (153) comprises:
a pair of switching plates (154) with a gap therebetween while facing each other, the switching plates (154) being installed to be rectilinearly movable in and out of the frame (151); and
a connecting plate (155) configured to interconnect the pair of switching plates (154) and to be exposed out of the frame (151), and
wherein when the upper and lower surfaces of the frame (151) are blocked by the switching member (153), a space defined by the pair of switching plates (154) and the connecting plate (155) is closed by the frame (151).

5. The regenerative thermal oxidizer according to claim 1, wherein:
an upper connection pipe (158) and a lower connection pipe (159) are installed to communicate with the respective upper and lower surfaces of the frame (151);
groove-shaped insertion paths (151d) are defined on the respective upper and lower surfaces of the frame (151) so that a lower end of the upper connection pipe (158) and an upper end of the lower connection pipe (159) are inserted into and coupled to the respective insertion paths (151d);
the upper and lower connection pipes (158, 159) communicate with the respective upper and lower portions of the harmful gas pipe (141); and
one side plate of the frame (151) is formed with a discharge hole (151c) for discharging the gas, which remains in the space of the switching member (153) closed by the side plates of the frame (151), to the outside.

## Patentansprüche

1. Regenerativer thermischer Oxidierer umfassend:
einen Körper (110), der eine Verbrennungskammer (111a) aufweist, die in seinem inneren oberen Abschnitt definiert ist, so dass Schadgas eingeführt und in der Verbrennungskammer (111a) verbrannt wird, während ein innerer unterer Abschnitt des Körpers (110) in wenigstens drei Zonen unterteilt ist;
ein Wärmespeicherelement (120), das in jeder der Zonen des Körpers (110) installiert ist, um Wärme zu speichern;
eine Vielzahl von Schadgasrohren (141), die derart installiert sind, dass ihre jeweiligen oberen Seiten mit jeder der jeweiligen Zonen des Körpers (110) in Verbindung stehen, um das Schadgas zu führen, um durch das Wärmespeicherelement (120) in die Verbrennungskammer (111a) eingeführt zu werden;
eine Vielzahl von Reingasrohren (143), die derart installiert sind, dass ihre jeweiligen oberen Seiten mit jeder der jeweiligen Zonen des Körpers (110) in Verbindung stehen, um Reingas zu führen, das durch Verbrennung des Schadgases in der Verbrennungskammer (111a) produziert wird und dann durch ein Wärmespeicherelement (120) hindurchgeht, durch das das Schadgas nicht hindurchgeht, um aus dem Körper (110) abgeführt zu werden;
eine Vielzahl von Reinigungsgasrohren (145), die derart installiert sind, dass ihre jeweilige eine Seite mit jeder der jeweiligen Zonen des Körpers (110) in Verbindung steht, um Reinigungsgas zu leiten, um in die Verbrennungskammer (111a) durch ein Wärmespeicherelement (120) eingeführt zu werden, durch das das Schadgas und das Reingas nicht hindurchgeht; und
eine erste Schalteinheit (150), eine zweite Schalteinheit (171) und eine dritte Schalteinheit (175), die dazu konfiguriert sind, das Schadgasrohr (141), das Reingasrohr (143) bzw. das Reinigungsgasrohr (145) zu öffnen und zu schließen, wobei:
obere und untere Seiten der ersten Schalteinheit (150) mit oberen bzw. unteren Abschnitten des Schadgasrohrs (141) in Verbindung stehen, wobei das Schadgasrohr (141) eine quadratische Form im Querschnitt aufweist,
und **dadurch gekennzeichnet, dass** die erste Schalteinheit (150) umfasst:
einen Rahmen (151), der eine hexaedrische Form aufweist und eine offene Seite und drei Seitenplatten aufweist, wobei obere und untere Oberflächen des Rahmens (151) offen sind, um mit den jeweiligen unteren und oberen Abschnitten des Schadgasrohrs (141) in Verbindung zu stehen; und durch
ein Schaltelement (153), das installiert ist, um in den und aus dem Rahmen (151) geradlinig beweglich zu sein, und erlaubt, dass die oberen und unteren Oberflächen des Rahmens (151) miteinander in Verbindung stehen und voneinander blockiert sind, wobei das Schaltelement (153) einen darin definierten Raum aufweist, wobei der Raum durch die Seitenplatten des Rahmens (151) geschlossen wird, und
wobei, wenn die oberen und unteren Oberflächen des Rahmens (151) durch das Schaltelement (153) blockiert werden, Gas, das in dem Raum des Schaltelements (153) verbleibt, der durch die Seitenplatten des Rahmens (151) geschlossen wird, zwangsweise zur Außenseite des Raums abgeführt wird.

2. Regenerativer thermischer Oxidierer nach Anspruch 1, wobei:
Führungsschienen (151a), die einander zugewandt sind, an inneren Oberflächen der zugewandten Seitenplatten des Rahmens (151) gebildet sind, um eine geradlinige Bewegung des Schaltelements (153) zu führen; und
Seiten des Schaltelements (153) eingefügt in und getragen durch die Führungsschienen (151a) sind.

3. Regenerativer thermischer Oxidierer nach Anspruch 1, wobei:
eine Einfügeschiene (151b) an einer inneren Oberfläche der Seitenplatte gebildet ist, die der offenen Seite des Rahmens (151) zugewandt ist; und
wenn die oberen und unteren Oberflächen des Rahmens (151) durch das Schaltelement (153) blockiert sind, die Einfügeschiene (151b) in eine Oberfläche des Schaltelements (153) eingefügt ist, die der Einfügeschiene (151b) zugewandt ist.

4. Regenerativer thermischer Oxidierer nach Anspruch 1, wobei das Schaltelement (153) umfasst:
ein Paar von Schaltplatten (154) mit einem Spalt dazwischen, während sie einander zugewandt sind, wobei die Schaltplatten (154) installiert sind, um in den und aus dem Rahmen (151) geradlinig bewegbar zu sein; und
eine Verbindungsplatte (155), die dazu konfiguriert ist, das Paar von Schaltplatten (154) miteinander zu verbinden und außerhalb des Rahmens (151) exponiert zu sein, und
wobei, wenn die oberen und unteren Oberflächen des Rahmens (151) durch das Schaltelement (153) blockiert sind, ein Raum, der durch das Paar von Schaltplatten (154) und die Verbindungsplatte (155) definiert ist, durch den Rahmen (151) geschlossen ist.

5. Regenerativer thermischer Oxidierer nach Anspruch 1, wobei:
ein oberes Verbindungsrohr (158) und ein unteres Verbindungsrohr (159) installiert sind, um mit den jeweiligen oberen und unteren Oberflächen des Rahmens (151) in Verbindung zu stehen;
Nuten-förmige Einfügepfade (151d) an den jeweiligen oberen und unteren Oberflächen des Rahmens (151) definiert sind, so dass ein unteres Ende des oberen Verbindungsrohrs (158) und ein oberes Ende des unteren Verbindungsrohrs (159) eingefügt in die und gekoppelt mit den jeweiligen Einfügepfaden (151d) sind;
die oberen und unteren Verbindungsrohre (158, 159) mit den jeweiligen oberen und unteren Abschnitten des Schadgasrohrs (141) in Verbindung stehen; und
eine Seitenplatte des Rahmens (151) mit einem Abführloch (151c) zum Abführen des Gases nach außen gebildet ist, das in dem Raum des Schaltelements (153) bleibt, der durch die Seitenplatten des Rahmens geschlossen wird.

## Revendications

1. Appareil thermique d'oxydation régénérative comprenant :
un corps (110) ayant une chambre de combustion (111a) définie dans sa partie supérieure interne si bien qu'un gaz nocif est introduit et brûlé dans la chambre de combustion (111a), pendant qu'une partie inférieure interne du corps (110) est séparée en au moins trois zones,
un élément de stockage de la chaleur (120) installé dans chacune des zones du corps (110) pour stocker la chaleur,
une pluralité de conduites de gaz nocif (141) installées de telle manière que leurs côtés supérieurs respectifs communiquent avec chacune des zones respectives du corps (110) pour guider le gaz nocif devant être introduit dans la chambre de combustion (111a) à travers l'élément de stockage de la chaleur (120),
une pluralité de conduites de gaz propre (143) installées de telle manière que leurs côtés supérieurs respectifs communiquent avec chacune des zones respectives du corps (110) pour guider du gaz propre, qui est produit dans la chambre de combustion (111a) par la combustion du gaz nocif et passe ensuite à travers un élément de stockage de la chaleur (120) à travers lequel le gaz nocif ne passe pas, devant être déchargé hors du corps (110),
une pluralité de conduites de gaz de purge (145) installées de telle manière que leur côté unique respectif communique avec chacune des zones respectives du corps (110) pour guider le gaz de purge devant être introduit dans la chambre de combustion (111a) à travers un élément de stockage de la chaleur (120) à travers lequel le gaz nocif et le gaz propre ne passent pas et
une première unité de bascule (150), une deuxième unité de bascule (171) et une troisième unité de bascule (175) configurées pour ouvrir et fermer la conduite de gaz nocif (141), la conduite de gaz propre (143) et la conduite de gaz de purge (145), respectivement, où :
les côtés supérieurs et inférieurs de la première unité de bascule (150) communiquent avec les parties supérieures et inférieures de la conduite de gaz nocif (141), respectivement où la conduite de gaz nocif (141) a une forme carrée en section transversale,
et **caractérisé en ce que** la première unité de bascule (150) comprend :
un cadre (151) ayant une forme d'hexaèdre et ayant un côté ouvert et trois plaques latérales, des surfaces supérieures et inférieures du cadre (151) étant ouvertes pour communiquer avec les parties supérieures et inférieures respectives de la conduite de gaz nocif (141) et par
un élément de bascule (153) installé de manière à être mobile de manière rectiligne dans et hors du cadre (151) et permettant aux surfaces supérieures et inférieures du cadre (151) de communiquer avec et d'être bloquées l'une de l'autre, l'élément de bascule (153) ayant un espace défini à l'intérieur, l'espace étant fermé par les plaques latérales du cadre (151), et
où quand les surfaces supérieures et inférieures du cadre (151) sont bloquées par l'élément de bascule (153), du gaz restant dans l'espace de l'élément de bascule (153) fermé par les plaques latérales du cadre (151) est déchargé de force à l'extérieur de l'espace.

2. Appareil thermique d'oxydation régénérative selon la revendication 1, **caractérisé en ce que** :
des rails de guidage (151a) se faisant face l'un à l'autre sont formés sur les surfaces internes des plaques latérales de face du cadre (151) pour guider le mouvement rectiligne de l'élément de bascule (153) et
les côtés de l'élément de bascule (153) sont insérés dans et soutenus par les rails de guidage (151a).

3. Appareil thermique d'oxydation régénérative selon la revendication 1, **caractérisé en ce que** :
un rail d'insertion (151b) est formé sur une surface interne de la plaque latérale faisant face au côté ouvert du cadre (151) et
quand les surfaces supérieures et inférieures du cadre (151) sont bloquées par l'élément de bascule (153), le rail d'insertion (151b) est inséré dans une surface de l'élément de bascule (153) faisant face au rail d'insertion (151b).

4. Appareil thermique d'oxydation régénérative selon la revendication 1, **caractérisé en ce que** l'élément de bascule (153) comprend :
une paire de plaques de bascule (154) avec un intervalle entre elles se faisant face l'une à l'autre, les plaques de bascule (154) étant installées de manière à être mobiles de manière rectiligne dans et hors du cadre (151) et
une plaque de connexion (155) configurée pour interconnecter la paire de plaques de bascule (154) et devant être exposée hors du cadre (151) et
où quand les surfaces supérieures et inférieures du cadre (151) sont bloquées par l'élément de bascule (153), un espace défini par la paire de plaques de bascule (154) et la plaque de connexion (155) est fermé par le cadre (151).

5. Appareil thermique d'oxydation régénérative selon la revendication 1, **caractérisé en ce que** :
une conduite de connexion supérieure (158) et une conduite de connexion inférieure (159) sont installées pour communiquer avec les surfaces supérieures et inférieures respectives du cadre (151),
des voies d'insertion en forme de rainure (151d) sont définies sur les surfaces supérieures et inférieures respectives du cadre (151) si bien qu'une extrémité inférieure de la conduite de connexion supérieure (158) et une extrémité supérieure de la conduite de connexion inférieure (159) sont insérées dans et couplées aux voies d'insertion respectives (151d),
les conduites de connexion supérieures et inférieures (158, 159) communiquent avec les parties supérieures et inférieures respectives de la conduite de gaz nocif (141) et
une plaque latérale du cadre (151) est formée avec un orifice de décharge (151c) pour décharger le gaz qui reste dans l'espace de l'élément de bascule (153) fermé par les plaques latérales du cadre (151) vers l'extérieur.
